# EUROPÄISCHE PATENTSCHRIFT

(11) **EP 2 536 525 B1**
(45) Veröffentlichungstag und Bekanntmachung des Hinweises auf die Patenterteilung: **05.04.2017**
(21) Anmeldenummer: 11705814.9
(22) Anmeldetag: 16.02.2011
(51) Int. Cl.: B23F 23/12, B23C 5/26, B23B 31/30

(54) **HYDRAULISCHES SPANNELEMENT**
HYDRAULIC CLAMPING ELEMENT
ÉLÉMENT DE SERRAGE HYDRAULIQUE

(30) Priorität: 17.02.2010 DE 102010008371
(43) Veröffentlichungstag der Anmeldung: 26.12.2012
(73) Patentinhaber: Wolf, Michael, 89518 Heidenheim (DE)
(72) Erfinder: Wolf, Michael, 89518 Heidenheim (DE)
(74) Vertreter: Wasmuth, Rolf
(86) Internationale Anmeldenummer: PCT/EP2011/000720
(87) Internationale Veröffentlichungsnummer: WO 2011/101117

(56) Entgegenhaltungen:
- EP-A2- 0 433 925
- DE-U1- 29 906 410
- GB-A- 2 074 056

## Beschreibung

Die Erfindung betrifft ein hydraulisches Spannelement der im Oberbegriff des Anspruchs 1 angegebenen Gattung.

Bei hydraulischen Spannelementen wird durch Betätigung von Druckschrauben oder durch das Zuführen eines Hydraulikmediums in einem hydraulischen System ein Druck aufgebaut, der einen ausfahrbaren Kolben beaufschlagt. Hierdurch wirkt auf den Kolben eine große Kraft, die zum Einspannen von zu spannenden Gegenständen dient. Die bevorzugte Anwendung solcher Spannelemente ist das Spannen von Maschinenelementen auf rotierenden Wellen.

Derartige hydraulische Spannelemente sind aus den Druckschriften DE 299 06 410 U, GB 2 074 056 A und EP 0 433 925 A2 bekannt.

Bei diesen bekannten hydraulischen Spannelementen liegt der Gewindeabschnitt der Druckschrauben ungeschützt in einem äußeren Bereich einer Gehäusebohrung, so dass die Druckschrauben den Einflüssen der Umgebung ausgesetzt sind, wie z. B. Staub, Schmutz, Bohremulsion usw., was zu einer Beeinträchtigung der Funktion der Druckschrauben führen kann. Um die Druckschrauben und ggf. weitere von außen zugängliche bewegliche Teile vor Verschmutzung zu schützen, wurde auch schon vorgeschlagen, Schutzkappen zu verwenden, die die Druckschrauben vor schädlichen Einflüssen schützen. Solche Schutzkappen haben jedoch den Nachteil, dass die Druckschrauben erst nach Montage der Schutzkappen zugänglich sind, so dass ein erhöhter Aufwand gegeben ist, um an die Druckschrauben zum Zweck des Spannens bzw. Entspannens des hydraulischen Spannelements zu gelangen. Die Druckschrauben müssen nach einer bestimmten Zeit geschmiert werden, um einem Verschleiß vorzubeugen. Auch hierzu müssen die Schutzkappen demontiert werden, damit eine Schmierung mittels Fettpresse erfolgen kann. Dies stellt einen erhöhten Kontroll- und Wartungsaufwand dar. In einigen Industriezweigen werden aber keinerlei Arten von Schmierfetten erlaubt, die nach außen dringen könnten. Die von austretendem Fett gebildeten Schmierfilme können nur mit aggressiven Reinigungsmitteln beseitigt werden, was jedoch in manchen Bereichen, z. B. in der Lebensmittelindustrie völlig inakzeptabel ist.

Der vorliegenden Erfindung liegt daher die Aufgabe zugrunde, ein hydraulisches Spannelement der gattungsgemäßen Art zu schaffen, das bezüglich des Spannens und Entspannens einfacher handhabbar und wartungsfrei ist.

Diese Aufgabe wird durch ein hydraulisches Spannelement mit den Merkmalen des Anspruchs 1 gelöst.

Bei diesem hydraulischen Spannelement befindet sich das Gewinde der Druckschraube in dem geschlossenen hydraulischen System, so dass eine ständige Schmierung des Gewindes gewährleistet ist. Ein Abschnitt der Druckschraube ragt aus dem Gehäuse hinaus, so dass eine gute Zugänglichkeit zum Verstellen der Druckschraube gegeben ist. Durch die Bildung einer ersten Druckkammer in Form eines Ringraums und dem Einsatz eines Druckrings, der mit der Druckschraube bewegt wird, sind die auf den Druckring und den an diesem vorgesehenen Dichtungsring wirkenden Kräfte begrenzt, so dass die bewegten Teile äußerst verschleißarm sind. Durch die in einem stirnseitigen Ende der Druckschraube begrenzte zweite Druckkammer, zu der eine fluidische Verbindung zur ersten Druckkammer besteht, kann bei Betätigung der Druckschraube eine große auf den Ringkolben wirkende Druckkraft erzeugt werden.

Zum einfachen Ansetzen eines Werkzeugs zur Betätigung der Druckschraube ist es zweckmäßig, dass die Druckschraube an ihrem aus dem Gehäuse hervorstehenden Ende mit einem Sechskant versehen ist. Um das Eindringen von Partikeln oder Flüssigkeit in die die Druckschraube aufnehmende Bohrung zu verhindern, ist es von Vorteil, dass die Druckschraube einen Schaft aufweist, der in einem Verschlussring geführt und mittels eines Dichtungsrings abgedichtet ist.

Gemäß einer bevorzugten Weiterbildung der Erfindung besteht der Druckring aus einem hochfesten Kunststoff, insbesondere Polyaryletherketon (PAEK). Dieses Material ist äußerst formstabil, so dass auch bei entsprechendem Druck in der ersten Druckkammer eine Verformung des Druckrings vermieden wird. Außerdem ist es vorteilhaft, dass der Dichtungsring eine zu der ersten Druckkammer offene Nut aufweist, wodurch zwei Dichtlippen gebildet werden, von denen eine an der Innenwandung der Bohrung und die andere an der Druckschraube anliegt.

In weiterer Ausgestaltung der Erfindung ist in der die Druckschraube aufnehmenden Bohrung eine Gewindehülse angeordnet, die ein Innengewinde aufweist, das als gehäuseseitiges Gewinde zum Zusammenwirken mit dem Außengewinde des Schraubabschnitts dient. Dies hat den Vorteil, dass das Innengewinde aus einem anderen Material bestehen kann als das Gehäuse selbst, wobei die Gewindehülse zweckmäßigerweise ein Außengewinde aufweist und in ein Innengewinde der Bohrung geschraubt und fixiert ist. Es ist außerdem zweckmäßig, dass die Druckschraube ein Außenteil und ein Innenteil umfasst, die fest miteinander verbunden sind, vorzugsweise mittels einer aus einem Innengewinde und einem Außengewinde gebildeten Schraubverbindung. An dem Außenteil ist ein hülsenförmiger Abschnitt ausgebildet, auf dem der Druckring und der Dichtungsring angeordnet sind. Diese Ausgestaltung von Außenteil und Innenteil bieten den Vorteil, dass zunächst der Druckring und Dichtungsring auf dem Hülsenabschnitt des Außenteils angeordnet werden und dann durch Zusammenfügen von Außenteil und Innenteil die Druckschraube fertig gestellt wird. Dabei ist es außerdem zweckmäßig, dass der Druckring und der Dichtungsring zwischen zwei radialen Bunden auf der Druckschraube fixiert sind.

Gemäß weiterer zweckmäßiger Ausgestaltung ist im Innenteil ein Verbindungskanal zur fluidischen Verbindung der ersten Druckkammer mit der zweiten Druckkammer vorgesehen. Alternativ hierzu ist es auch möglich, dass die fluidische Verbindung auf andere Weise realisiert wird, beispielsweise durch eine axiale Nut in der Gewindehülse oder durch einen entsprechenden freien Querschnitt der ineinandergreifenden Gewinde. Die zweite Druckkammer ist vorzugsweise über eine am inneren Ende der Bohrung angeordnete Verbindungs-öffnung mit dem Kolbenraum fluidisch verbunden.

Um die Druckschrauben bezüglich ihres Bauraums möglichst klein zu gestalten und trotzdem ein ausreichendes Volumen hydraulischer Flüssigkeit zum Druckaufbau zur Verfügung zu haben, ist es zweckmäßig, in dem Gehäuse zwei Bohrungen mit darin montierten Druckschrauben vorzusehen, wobei die Druckschrauben bezogen auf eine Stirnseite des Gehäuses diametral gegenüberliegend angeordnet sind. Außerdem ist es vorteilhaft, in dem Gehäuse eine Bohrung mit einem radialen Absatz vorzusehen und in der Bohrung einen Bolzen begrenzt verschieblich zu lagern, wobei der Bolzen von einem in einer Kammer herrschenden Druck gegen die Kraft einer Druckfeder verschiebbar ist. Dieser Bolzen ist mit einem äußeren Ende in einer Bohrung eines Verschlussrings geführt und mittels eines Dichtungsrings abgedichtet. Durch diese technischen Merkmale wird in Abhängigkeit des jeweils im hydraulischen System herrschenden Drucks der Bolzen gegen die Kraft der Druckfeder verschoben, wobei durch die Bohrung in dem Verschlussring visuell festgestellt werden kann, welche Lage der Bolzen einnimmt, das heißt, ob ein entsprechender Druck im hydraulischen System herrscht.

In weiterer Ausgestaltung ist an dem Ringkolben eine Druckscheibe ausgebildet, die radial nach innen verläuft. In dem Gehäuse können weitere achsparallele Bohrungen mit radialem Absatz vorgesehen sein, wobei in der Druckscheibe koaxial zu diesen Bohrungen verlaufende Gewindebohrungen angeordnet sind, in die in den Bohrungen befindliche Schrauben geschraubt sind. Dabei ist in einem erweiterten Teil der Bohrung eine die Schraube umgebende Druckfeder angeordnet, die einerseits an dem radialen Absatz und andererseits an einem Schraubenkopf bzw. einer Zwischenscheibe abgestützt ist. Diese Anordnung aus mit dem Ringkolben verschraubten Schrauben und Druckfedern bewirkt, dass beim Herausfahren des Ringkolbens die Druckfeder gespannt wird und diese beim Senken des Drucks im hydraulischen System eine Rückstellkraft auf die Schraube und somit den Ringkolben ausübt. Die Bohrung ist vorzugsweise auf der dem Ringkolben abgewandten Stirnseite des Gehäuses mittels eines Dichtungsklebstoffs befestigten Deckel geschlossen.

Ein Ausführungsbeispiel des erfindungsgemäßen hydraulischen Spannelements ist nachstehend anhand der Zeichnung näher erläutert. In der Zeichnung zeigt:
- Fig. 1: eine Außenansicht eines hydraulischen Spannelements,
- Fig. 2: eine Ansicht in Richtung des Pfeils II in Fig. 1,
- Fig. 3: in vergrößerter Darstellung einen Schnitt entlang der Linie III-III in Fig. 2,
- Fig. 4: eine Baueinheit zur Druckerzeugung zum Einsatz in einer Bohrung im Gehäuse des hydraulischen Spannelements in gegenüber Fig. 3 vergrößerten Darstellung,
- Fig. 5: einen Schnitt entlang der Linie V-V in Fig. 2.

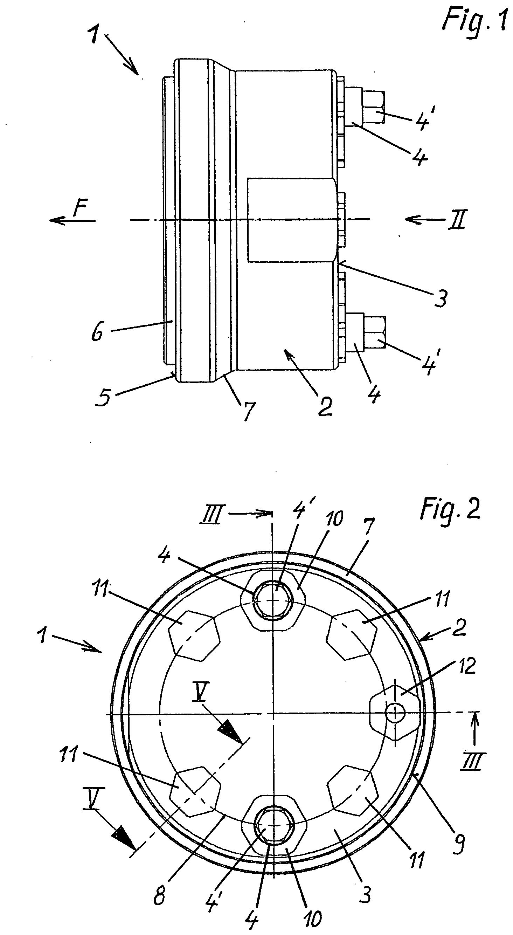

Die Fig. 1 zeigt ein hydraulisches Spannelement 1 mit einem Gehäuse 2, das an einer ersten Stirnseite 3 zwei Druckschrauben 4 und an einer zweiten Stirnseite 5 einen Druckkolben aufweist, wobei der Druckkolben als Ringkolben 6 gestaltet ist, wie später noch näher beschrieben wird. Die Druckschrauben 4 weisen an den äußeren Enden einen Sechskant 4' zum Ansetzen eines Werkzeugs auf. Das Gehäuse 2 besitzt eine radiale Erweiterung 7, so dass der der zweiten Stirnseite 5 benachbarte Bereich des Gehäuses 2 im Druckmesser etwas größer ist als der der ersten Stirnseite 3 benachbarte Bereich. Mit F ist die Bewegungsrichtung des Ringkolbens 6 beim Spannen angegeben.

Die Fig. 2 zeigt eine Ansicht des hydraulischen Spannelements 1 in Richtung des Pfeils II in Fig. 1. Bezogen auf die kreisförmige erste Stirnseite 3 sind diametral gegenüberliegend die zwei Druckschrauben 4 mit dem jeweiligen Sechskant 4' angeordnet, deren Mittelpunkte auf einer Kreisbahn 8 im Abstand zu einer Mantelfläche 9 des Gehäuses 2 liegen. Die Druckschrauben 4 sind von Verschlussringen 10 umgeben. Auf der Kreisbahn 8 befinden sich in gleichmäßigem Abstand zueinander vier Verschlussdeckel 11 für im Gehäuse 2 angeordnete Bohrungen, auf die später noch näher eingegangen wird. Bezogen auf die Kreisbahn 8 ist etwas nach außen versetzt ein Verschlussring 12 für eine weitere Bohrung vorgesehen.

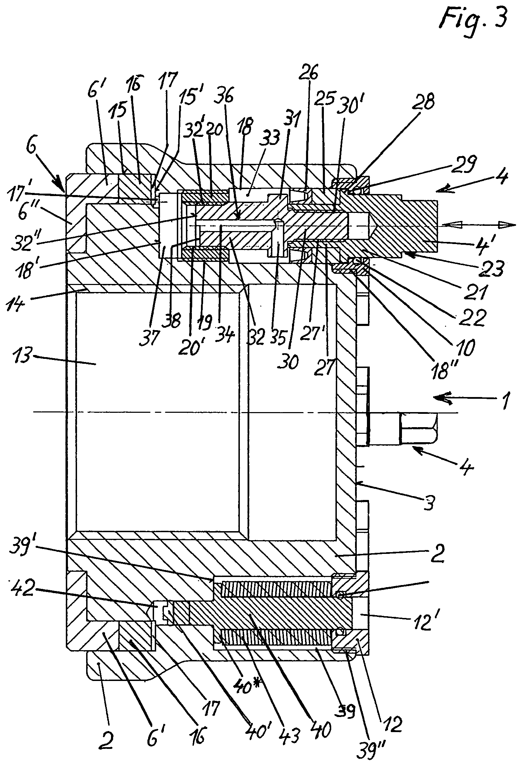

Die Fig. 3 zeigt einen Schnitt entlang der Linie III-III in Fig. 2. Das Gehäuse 2 besitzt eine zu der zweiten Stirnseite 5 offene zentrische Sackbohrung 13 mit einen Innengewinde 14 zum Aufschrauben des Spannelements 1, beispielsweise auf einen Gewindezapfen oder dergleichen. Konzentrisch zur Sackbohrung 13 ist an der zweiten Stirnseite 5 eine Ringnut 15 vorgesehen, in der der Ringkolben 6 axial gleitverschieblich gelagert ist. Der Ringkolben 6 ist im radialen Schnitt gesehen L-förmig gestaltet, wobei ein Schenkel 6' den ringförmigen Kolben und ein anderer Schenkel 6" eine radial nach innen verlaufende Druckscheibe bilden. In der Ringnut 15 befindet sich in Anlage am Ringkolben 6 ein Dichtungsring 16, der einen zu einem Nutgrund 15' der Ringnut gebildeten Kolbenraum 17 begrenzt.

Im oberen Bereich in Fig. 3 ist im Gehäuse 2 ein achsparallele Bohrung 18 angeordnet, die sich von der ersten Stirnseite 3 bis etwa zur radialen Erweiterung 7 erstreckt und deren inneres Ende 18' als orthogonale Fläche zur Axialrichtung gestaltet ist. Am inneren Ende 18' befindet sich eine Verbindungsöffnung 17' zum Kolbenraum 17. Benachbart zum inneren Ende 18' ist ein Abschnitt der Bohrung 18 mit einem Innengewinde 19 versehen, in das eine Gewindehülse 20 geschraubt und fixiert ist. Die Gewindehülse 20 ist an ihrem inneren Umfang ebenfalls mit einem Innengewinde 20' versehen. In der Bohrung 18 ist die Druckschraube 4 angeordnet, deren äußeres Ende als Sechskant 4' ausgebildet ist, wie bereits zu Fig. 1 und 2 beschrieben. Ein Schaft 21 der Druckschraube 4 ist durch den Verschlussring 10 geführt, der in einer Ringnut einen am Schaft 21 anliegenden Dichtungsring 22 aufnimmt und in ein am äußeren Ende der Bohrung 18 vorgesehenes Gewinde 18" geschraubt ist.

Die Druckschraube 4 besteht im dargestellten Ausführungsbeispiel aus einem Außenteil 23, einem Innenteil 24, einem Druckring 25 und einem Dichtungsring 26. Der Druckring 25 besteht vorzugsweise aus einem hochfesten Kunststoff, insbesondere aus einem Polyaryletherketon (PAEK), der selbst bei hohen auf ihn wirkenden Druckkräften äußerst formstabil ist. Das Außenteil 23 umfasst den bereits genannten Schaft 21 und den Sechskant 4' sowie einen Hülsenabschnitt 27 mit einem Innengewinde 27'. An dem Ende des Schafts 21, das dem Hülsenabschnitt 27 benachbart ist, weist der Schenkel 21 einen radialen Bund 28 auf, der in einer Endstellung der Druckschraube 4 an einem radialen Absatz 29 des Verschlussrings 10 anliegt. Das Innenteil 24 weist einen ersten Gewindeabschnitt 30 mit Außengewinde 30', einen radialen Bund 31 mit einem Schraubabschnitt 32 mit einem Außengewinde 32' auf, mit dem die Druckschraube 4 in das Innengewinde 20' der Gewindehülse 20 schraubbar ist.

Das Innenteil 24 und die Gewindehülse 20 können aus unterschiedlichem Material bestehen, wobei für die Gewindehülse 20 Edelstahl und für das Innenteil 24 Vergütungsstahl in Betracht kommen.

Das Innenteil 24 ist mit dem Außengewinde 30' in das Innengewinde 27' des Hülsenabschnitts 27 geschraubt, wobei vorzugsweise vor der Montage an dem Innengewinde 27' und/oder Außengewinde 30' ein anaerob härtender Komponentenkleber auf der Basis von Methacrylaten oder Cyanacrylaten aufgetragen und dann die Gewinde ineinander geschraubt und mit definiertem Moment das Außenteil 23 und Innenteil 24 gegeneinander angezogen werden. Vor der Verbindung von Innenteil 24 und Außenteil 23 wird der Druckring 25 mit dem Dichtungsring 26 auf den Hülsenabschnitt 27 gesteckt. Der Druckring 25 und der Dichtungsring 26 sind in axialer Richtung zwischen den radialen Bunden 28 und 31 fixiert.

Zwischen der Druckschraube 4, insbesondere deren Innenteil 24 und der Wandung der Bohrung 18 ist eine erste Druckkammer 33 gebildet, die in axialer Richtung von Gewindehülse 20 und dem Druckring 25 bzw. des davor befindlichen Dichtungsrings 26 begrenzt wird. Da die Druckschraube 4 durch Drehung in der Gewindehülse 20 sich in axialer Richtung bewegt, ist das Volumen der ersten Druckkammer 33 veränderbar. Ein stirnseitiges Ende 32" des Schraubabschnitts 32 begrenzt eine vor dem inneren Ende 18' der Bohrung 18 gebildete zweite Druckkammer 37, die ebenso wie die erste Druckkammer 33 durch die axiale Bewegung der Druckschraube 4 im Volumen veränderbar ist. In dem Schraubabschnitt 32 sind eine axiale Bohrung 34 und eine in dieser endende radiale Bohrung 35 vorgesehen, so dass diese Bohrungen 34, 35 einen Verbindungskanal 36 zwischen der ersten Druckkammer 33 und der zweiten Druckkammer 37 bilden. An dem stirnseitigen Ende 32" ist eine radiale Nut 38 vorgesehen, durch die der Verbindungskanal 36 auch dann fluidisch mit dem Kolbenraum 17 verbunden ist, wenn das stirnseitige Ende 32" des Schraubabschnitts 32 an dem inneren Ende 18' der Bohrung 18 anliegt.

Im unteren Bereich in Fig. 3 ist in dem Gehäuse 2 eine weitere achsparallele Bohrung 39 angeordnet, die als Stufenbohrung mit einem radialen Absatz 39' ausgebildet ist und an ihrem der ersten Stirnseite 3 benachbarten Abschnitt ein Innengewinde 39" aufweist, in das ein Verschlussring 12 geschraubt ist. Der Verschlussring 12 besitzt eine Bohrung 12', in der ein Bolzen 40 gelagert ist und wobei ein an dem Umfang des Bolzens 40 anliegender Dichtungsring 41 in einer Nut des Verschlussrings 12 gehalten ist. Der Bolzen 40 ist mit einem inneren Abschnitt 40' in dem Teil der Bohrung 39 mit dem geringeren Durchmesser begrenzt gleitverschieblich gehalten und begrenzt eine am inneren Ende der Bohrung 12 gebildete Kammer 42, die mit dem Kolbenraum 17 fluidisch verbunden ist. Der Bolzen 40 weist einen radialen Bund 40* auf und zwischen diesem und dem Verschlussring 12 ist eine den Bolzen 40 umgebende Druckfeder 43 angeordnet, die im Ausführungsbeispiel als Tellerfederpaket ausgeführt ist und den Bolzen 40 mit seinem radialen Bund 40* gegen den radialen Absatz 39' der Bohrung 39 belastet.

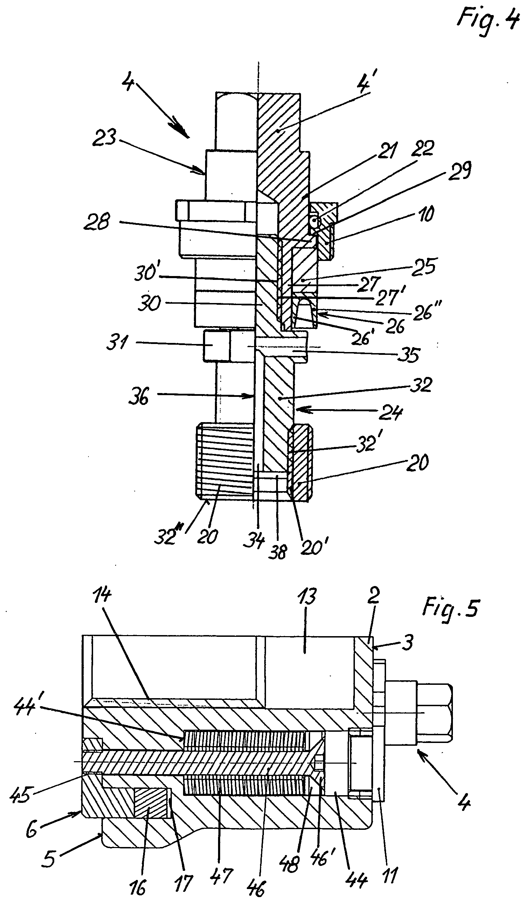

In Figl. 4 ist die Druckschraube 4 vergrößert dargestellt, zur Hälfte in Außenansicht und zur Hälfte im Schnitt mit dem Verschlussring 10, der die Druckschraube 4 führt, und der Gewindehülse 20, in die die Druckschraube 4 hinein bzw. herausgeschraubt wird. Aus dieser Darstellung ist ersichtlich, dass der Sechskant 4' angeformt ist. Der obere Rand des Verschlussrings 10 ist ebenfalls als Sechskant ausgeführt, um mit einem entsprechenden Werkzeug den Verschlussring 10 im Gehäuse 2 festzuziehen. Der Dichtungsring 26 weist eine zu der ersten Druckkammer 33 in Fig. 3 offene Nut auf, so dass zwei Dichtlippen 26', 26" gebildet werden, die zur Anlage an dem Hülsenabschnitt 27 und der Wandung der Bohrung 18 (vgl. Fig. 3) dienen. Zur Montage der Druckschraube 4 bzw. dem Zusammenschrauben des Außenteils 23 mit dem Innenteil 24 ist, wie auf der linken Seite in Fig. 4 ersichtlich, zum Ansetzen eines Werkzeugs der radiale Bund 31 sechseckig ausgeführt. Im Übrigen stimmen für gleiche Teile die Bezugszeichen mit denjenigen der Fig. 3 überein.

Die Fig. 5 zeigt einen Schnitt entlang der Linie V-V in Fig. 2 in vergrößerter Darstellung. Im Gehäuse 2 des hydraulischen Spannelements 1 ist eine weitere achsparallele Bohrung 44 vorgesehen, die sich über die gesamte Länge des Gehäuses 2 erstreckt und als Stufenbohrung mit einem radialen Absatz 44' ausgeführt ist. Der im Durchmesser reduzierte Abschnitt der Bohrung 44 befindet sich in dem der zweiten Stirnseite 5 benachbarten Bereich und deckungsgleich zu der Bohrung 44 ist in dem Schenkel 6" des Ringkolbens 6 eine Gewindebohrung 45 vorgesehen, in die eine sich durch die Bohrung 44 erstreckende Schraube 46 gedreht ist. Das dem Ringkolben 6 abgewandte Ende der Schraube 46 weist einen Schraubenkopf 46' auf. Zwischen der Wandung der Bohrung 44 in deren im Durchmesser erweiterten Abschnitt und der Schraube 46 ist ein Ringraum gebildet, in dem eine die Schraube 46 umgebende Druckfeder 47, im gezeigten Ausführungsbeispiel ein Tellerfederpaket, angeordnet ist. Zwischen dem Schraubenkopf 46' und dem Tellerfederpaket 47 ist eine der Form des Schraubenkopfes 46' angepasste Zwischenscheibe 48 vorgesehen. Das an der ersten Stirnseite 3 liegende Ende der Bohrung 44 ist durch den mittels eines Dichtungsklebstoffs befestigten Verschlussdeckels 11 hermetisch dicht verschlossen.

Aus Fig. 5 ist auch ein Teil der zentrischen Sackbohrung 13 und des Innengewindes 14 sowie des vorstehenden Endes der Druckschraube 4 ersichtlich. Die beschriebene Anordnung mit Schraube 46 und Druckfeder 47 in einer von dem Verschlussdeckel 11 verschlossenen Bohrung 44 ist insgesamt vier Mal vorgesehen, wie sich dies aus der Anzahl der Verschlussdeckel 11 in Fig. 2 ergibt. Die erste Druckkammer 33, die zweite Druckkammer 37, der Kolbenraum 17, die Kammer 42 sowie die Verbindungsöffnung 17' und der Verbindungskanal 36 sind mit einer nicht komprimierbaren Hydraulikflüssigkeit gefüllt und bilden ein geschlossenes System.

Das hydraulische Spannelement 1 wird mit dem in der Sackbohrung 13 des Gehäuses 2 befindlichen Innengewinde 14 auf beispielsweise einen Gewindezapfen geschraubt, bis der Ringkolben 6 mit seiner durch den Schenkel 6" gebildeten Druckfläche ohne Kraftbeaufschlagung an einem zu spannenden Gegenstand anliegt oder sich in minimalem Abstand vor diesem befindet. Dann erfolgt durch Drehen der Druckschrauben 4 mittels eines Werkzeugs am Sechskant 4' eine axiale Verschiebung der Druckschraube 4, die durch die Steigung der ineinander greifenden Gewinde 20', 32' von Gewindehülse 20 und Schraubabschnitt 32 des Innenteils 24 bestimmt wird. Mit dieser Axialbewegung werden ebenso der Druckring 25 und der Dichtungsring 26 in Richtung auf die Gewindehülse 20 verschoben, wodurch das Volumen der ersten Druckkammer 33 verringert und somit der Druck der Hydraulikflüssigkeit erhöht wird. Gleichzeitig verringert auch das stirnseitige Ende 32" das Volumen der zweiten Druckkammer 37 durch diese Axialbewegung der Druckschraube 4.

Der in der ersten Druckkammer 30 aufgebaute Druck bewirkt, dass Hydraulikflüssigkeit durch die Bohrungen 35 und 34 des Verbindungskanals 36 in die zweite Druckkammer 37 fließt und der zusätzlich durch Verringerung des Volumens in der zweiten Druckkammer steigende Druck ein Verdrängen der Hydraulikflüssigkeit durch die Verbindungsöffnung 17' in den Kolbenraum 17 zur Folge hat. Der die Fläche des Verdichtungsrings 16 bzw. des Ringkolbens 6 beaufschlagende Druck der Hydraulikflüssigkeit bewirkt eine Verschiebung des Ringkolbens 6 in Richtung des Pfeils F in Fig. 1, so dass der Ringkolben 6 mit entsprechender Kraft an den zu spannenden Gegenstand gedrückt wird und diesen gegen ein Widerlager spannt. Da der Druck im gesamten hydraulischen System gleich groß ist, kann mit relativ geringer Kraft an den Spannschrauben 4 eine große Spannkraft F erzeugt werden, da die druckbeaufschlagte Fläche des Ringkolbens 6 bzw. des Dichtungsrings 16 viel größer ist als die Druck erzeugenden Flächen der Spannschraube 4.

Der Druck im Hydrauliksystem herrscht ebenso in der Kammer 42, so dass der Druck auf den Bolzen 40 wirkt und diesen gegen die Kraft des als Druckfeder 43 wirkenden Tellerfederpakets verschiebt. Der Weg dieser Verschiebung ist abhängig von der Größe des Drucks im Hydrauliksystem, so dass durch die Bohrung 12' im Verschlussring 12 aufgrund der Lage der Stirnfläche des Bolzens 40 festgestellt werden kann, ob ein ausreichender Druck im Hydrauliksystem herrscht. Mit der Verschiebung des Ringkolbens 6 in Richtung des Pfeils F wird die Schraube 46 mit ihrem Schraubenkopf 46' gegen das die Druckfeder 47 bildende Tellerfederpaket gezogen, wodurch in dieser eine Rückstellkraft erzeugt wird.

Zum Lösen bzw. Entspannen wird die Druckschraube 4 in entgegengesetzter Richtung gedreht, wodurch das Volumen in der ersten Druckkammer 33 und der zweiten Druckkammer 37 vergrößert wird und somit der Druck im Hydrauliksystem sinkt. Dadurch wird auch die vom Ringkolben 6 auf den zu spannenden Gegenstand wirkende Kraft F reduziert. Mit nachlassendem Druck wirkt die Rückstellkraft der insgesamt vier Druckfedern 47, so dass diese die Schrauben 46 in Richtung auf die Verschlussdeckel 11 bewegen und den Ringkolben 6 in den Kolbenraum 17 hineinziehen. Mit nachlassendem Druck wird auch der Bolzen 40 von der auf dessen radialen Bund 40* wirkenden Druckfeder 43 zurückgestellt. Durch die Vergrößerung des Volumens in der ersten Druckkammer 33 und der zweiten Druckkammer 37 wird aus dem Kolbenraum 17 Hydraulikflüssigkeit durch die Verbindungsöffnung 17' in die zweite Druckkammer 37 sowie durch den Verbindungskanal 36 in die erste Druckkammer 33 zurückgeführt. Diese Anordnung zur Rückstellung des Ringkolbens 6 in die Ringnut hinein führt dazu, dass der Ringkolben keine Kraft mehr auf den zu spannenden Gegenstand ausübt und somit das hydraulische Spannelement 1 leicht von dem Gewindezapfen oder dergleichen von Hand abgeschraubt werden kann, da das Drehmoment zum Lösen nicht größer ist als beim Aufschrauben. Die Rückführung der Hydraulikflüssigkeit in die erste Druckkammer 33 verhindert, dass Luft in das hydraulische System eindringt.

## Patentansprüche

1. Hydraulisches Spannelement (1) mit einem Gehäuse (2), das an einer Stirnseite (5) einen in Axialrichtung des Gehäuses (2) beweglichen Ringkolben (6) aufweist, der einen im Gehäuse (2) gebildeten Kolbenraum (17) begrenzt, und mit mindestens einer in dem Gehäuse (2) angeordneten Bohrung (18) und mindestens einer in der Bohrung (18) gebildeten Druckkammer, deren Volumen durch Drehen einer Druckschraube (4) veränderbar ist, wobei die Druckkammer mit dem Kolbenraum (17) fluidisch verbunden ist,
**dadurch gekennzeichnet, dass** die Druckschraube (4) über einen Längenabschnitt einen radialen Abstand zur Wandung der Bohrung (18) aufweist und dadurch eine erste Druckkammer (33) gebildet wird, wobei die Druckschraube (4) mit einem Druckring (25) und Dichtungsring (26) versehen ist und in einem axialen Abstand zu diesen ein Schraubabschnitt (32) mit Außengewinde (32'), das mit einem gehäuseseitigen Gewinde (20') zusammenwirkt, vorgesehen ist, wobei ein stirnseitiges Ende (32") der Druckschraube (4) in der Bohrung (18) eine zweite Druckkammer (37) begrenzt und die erste und zweite Druckkammer (33, 37) sowie der Kolbenraum (17) fluidisch miteinander verbunden sind, und dass das Außengewinde (32') und das gehäuseseitige Gewinde (20') zwischen der ersten Druckkammer (33) und der zweiten Druckkammer (37), die mit einem Hydraulikfluid gefüllt sind, angeordnet sind und von dem Hydraulikfluid geschmiert sind.

2. Spannelement nach Anspruch 1,
**dadurch gekennzeichnet, dass** die Druckschraube (4) aus dem Gehäuse (2) etwas hervorsteht und mit einem Sechskant (4') versehen ist.

3. Spannelement nach Anspruch 1 oder 2,
**dadurch gekennzeichnet, dass** die Druckschraube (4) einen Schaft (21) aufweist, der in einem Verschlussring (10) geführt und mittels eines Dichtungsrings (22) abgedichtet ist.

4. Spannelement nach einem der Ansprüche 1 bis 3,
**dadurch gekennzeichnet, dass** in der Bohrung (18) eine Gewindehülse (20) angeordnet ist, die ein Innengewinde (20') aufweist, das als gehäuseseitiges Gewinde zum Zusammenwirken mit dem Außengewinde (32') des Schraubabschnitts (32) dient.

5. Spannelement nach einem der Ansprüche 1 bis 4,
**dadurch gekennzeichnet, dass** die Druckschraube (4) ein Außenteil (23) und ein Innenteil (24) umfasst, die fest miteinander verbunden sind, vorzugsweise mittels einer aus einem Innengewinde (27') und einem Außengewinde (30') gebildeten Schraubverbindung.

6. Spannelement nach Anspruch 5,
**dadurch gekennzeichnet, dass** an dem Außenteil (23) ein Hülsenabschnitt (27) ausgebildet ist, auf dem der Druckring (25) und der Dichtungsring (26) angeordnet sind.

7. Spannelement nach einem der Ansprüche 1 bis 6,
**dadurch gekennzeichnet, dass** der Druckring (25) und der Dichtungsring (26) zwischen zwei radialen Bunden (28, 31) auf der Druckschraube (4) axial fixiert sind.

8. Spannelement nach Anspruch 5,
**dadurch gekennzeichnet, dass** im Innenteil (24) ein Verbindungskanal (36) zur fluidischen Verbindung der ersten Druckkammer (33) mit der zweiten Druckkammer (37) vorgesehen ist.

9. Spannelement nach einem der Ansprüche 1 bis 8,
**dadurch gekennzeichnet, dass** die zweite Druckkammer (37) über eine am inneren Ende (18') der Bohrung (18) angeordnete Verbindungsöffnung (17') fluidisch mit dem Kolbenraum (17) verbunden ist.

10. Spannelement nach einem der Ansprüche 1 bis 9,
**dadurch gekennzeichnet, dass** in dem Gehäuse (2) zwei Bohrungen (18) mit darin montierten Druckschrauben (4) vorgesehen sind, wobei die Druckschrauben (4) bezogen auf eine Stirnseite (3) des Gehäuses (2) diametral gegenüberliegend angeordnet sind.

11. Spannelement nach einem der Ansprüche 1 bis 10,
**dadurch gekennzeichnet, dass** in dem Gehäuse (2) eine Bohrung (39) mit einem radialen Absatz (39') vorgesehen und in der Bohrung (39) ein Bolzen (40) begrenzt verschieblich gelagert ist, wobei der Bolzen (40) von einem in einer Kammer (42) herrschenden Druck gegen die Kraft einer Druckfeder (43) verschiebbar ist.

12. Spannelement nach Anspruch 11,
**dadurch gekennzeichnet, dass** der Bolzen (40) mit einem äußeren Ende in einer Bohrung (12') eines Verschlussrings (12) geführt und mittels eines Dichtungsrings (41) abgedichtet ist.

13. Spannelement nach einem der Ansprüche 1 bis 12,
**dadurch gekennzeichnet, dass** an dem Ringkolben (6) eine Druckscheibe ausgebildet ist, die radial nach innen verläuft, wobei in dem Gehäuse (2) mindestens zwei achsparallele Bohrungen (44) mit radialem Absatz (44') vorgesehen und in der Druckscheibe koaxial zu den Bohrungen (44) verlaufende Gewindebohrungen (45) angeordnet sind, wobei in den Bohrungen (44) befindliche Schrauben (46) in die Gewindebohrungen (45) geschraubt sind.

14. Spannelement nach Anspruch 13,
**dadurch gekennzeichnet, dass** in einem erweiterten Teil der Bohrung (44) eine die Schraube (46) umgebende Druckfeder (47) angeordnet ist, die einerseits an dem radialen Absatz (44') und andererseits an einem Schraubenkopf (46') bzw. einer Zwischenscheibe (48) abgestützt ist.

## Claims

1. Hydraulic clamping element (1), comprising a housing (2) having at an end face (3) an annular piston (6), which is movable in the axial direction of the housing (2) and bounds a piston chamber (17) formed in the housing (2), and further comprising at least one bore (18) arranged in the housing (2) and at least one pressure chamber formed in the bore (18), the volume of which pressure chamber can be varied by turning a pressure screw (4), the pressure chamber being in fluidic connection with the piston chamber (17)
**characterised in that** the pressure screw (4) has along a section of its length a radial distance from the wall of the bore (18), whereby a first pressure chamber (33) is formed, wherein the pressure screw (4) is provided with a thrust washer (25) and a sealing ring (26) and wherein at an axial distance therefrom there is provided a screw section (32) with a male thread (32') acting together with a housing-side thread (20'), wherein an end face (32") of the pressure screw (4) bounds a second pressure chamber (37) in the bore (18) and the first and second pressure chambers (33, 37) and the piston chamber (17) are in mutual fluidic connection, and **in that** the male thread (32') and the housing-side thread (20') are arranged between the first pressure chamber (33) and the second pressure chamber (37), which are filled with a hydraulic fluid, and lubricated by the hydraulic fluid.

2. Clamping element according to claim 1,
**characterised in that** the pressure screw (4) projects slightly from the housing (2) and is provided with a hexagon (4').

3. Clamping element according to claim 1 or 2,
**characterised in that** the pressure screw (4) has a shank (21), which is guided in a locking ring (10) and sealed by means of a sealing ring (22).

4. Clamping element according to any of claims 1 to 3,
**characterised in that** a threaded sleeve (20) with a female thread (20') provided for acting together as a housing-side thread with the male thread (32') of the screw section (32) is located in the bore (18).

5. Clamping element according to any of claims 1 to 4,
**characterised in that** the pressure screw (4) has an outer part (23) and an inner part (24), which are firmly joined to one another, preferably by means of a screw connection consisting of a female thread (27') and a male thread (30').

6. Clamping element according to claim 5,
**characterised in that** a sleeve section (27), on which the thrust washer (25) and the sealing ring (26) are arranged, is formed on the outer part (23).

7. Clamping element according to any of claims 1 to 6,
**characterised in that** the thrust washer (25) and the sealing ring (26) are axially located between two radial collars (28, 31) on the pressure screw (4).

8. Clamping element according to claim 5,
**characterised in that** a connecting passage (36) for a fluidic connection between the first pressure chamber (33) and the second pressure chamber (37) is provided in the inner part (24).

9. Clamping element according to any of claims 1 to 8,
**characterised in that** the second pressure chamber (37) is in fluidic connection with the piston chamber (17') via a connecting port (17') located at the inner end (18') of the bore (18).

10. Clamping element according to any of claims 1 to 9,
**characterised in that** two bores (18) with pressure screws (4) are provided in the housing (2), the pressure screws (4) being arranged diametrically opposite in relation to an end face (3) of the housing (2).

11. Clamping element according to any of claims 1 to 10,
**characterised in that** a bore (39) with a radial shoulder (39') is provided in the housing (2) and a bolt (40) capable of limited displacement is provided in the bore (39), the bolt (40) being displaceable against the force of a compression spring (43) by a pressure prevailing in the chamber (42).

12. Clamping element according to claim 11,
**characterised in that** the bolt (40) is guided with an outer end in a bore (12') of a locking ring (12) and sealed by means of a sealing ring (41).

13. Clamping element according to any of claims 1 to 12,
**characterised in that** a thrust washer extending radially inwards is formed on the annular piston (6), wherein at least two axially parallel bores (44) with radial shoulders (44') are provided in the housing (2) and threaded holes (45) coaxial with the bores (44) are arranged in the thrust washer, and wherein screws (46) situated in the bores (44) are tightened into the threaded holes (45).

14. Clamping element according to claim 13,
**characterised in that** a compression spring (47), which surrounds the screw (46) and is supported on the radial shoulder (44') on the one hand and on a screw head (46') or an intermediate washer (48) on the other hand, is located in a widened part of the bore (44).

## Revendications

1. Elément de serrage hydraulique (1) avec un boîtier (2) comportant sur un côté frontal (5) un piston annulaire (6) qui est mobile dans le sens axial du boîtier (2) et qui limite un espace de piston (17) formé dans le boîtier (2), et avec au moins un perçage (18) disposé dans le boîtier (2), et au moins une chambre de pression qui est formée dans le perçage (18) et dont le volume est apte à être modifié grâce à la rotation d'une vis de pression (4), la chambre de pression étant en communication fluidique avec l'espace de piston (17),
**caractérisé en ce que** la vis de pression (4) présente sur une section longitudinale un écartement radial par rapport à la paroi du perçage (18), et une première chambre de pression (33) est ainsi formée, la vis de pression (4) étant pourvue d'une bague de pression (25) et d'une bague d'étanchéité (26), et une section de vis (32) étant prévue à une certaine distance axiale de ces dernières, avec un filetage extérieur (32') qui coopère avec un filetage côté boîtier (20'), une extrémité frontale (32") de la vis de pression (4) limitant dans le perçage (18) une seconde chambre de pression (37), et les première et seconde chambres de pression (33, 37) ainsi que l'espace de piston (17) étant en communication de fluide, et **en ce que** le filetage extérieur (32') et le filetage côté boîtier (20') sont disposés entre la première chambre de pression (33) et la seconde chambre de pression (37), qui sont remplies d'un fluide hydraulique, et sont lubrifiés par ledit fluide hydraulique.

2. Elément de serrage selon la revendication 1,
**caractérisé en ce que** la vis de pression (4) dépasse un peu du boîtier (2) et est pourvue d'un six pans (4').

3. Elément de serrage selon la revendication 1 ou 2,
**caractérisé en ce que** la vis de pression (4) comporte une tige (21) qui est guidée dans une bague de verrouillage (10) et qui est rendue étanche grâce à une bague d'étanchéité (22).

4. Elément de serrage selon l'une des revendications 1 à 3,
**caractérisé en ce qu'**il est prévu dans le perçage (18) un manchon fileté (20) présentant un filetage intérieur (20') qui sert de filetage côté boîtier pour coopérer avec le filetage extérieur (32') de la section de vis (32).

5. Elément de serrage selon l'une des revendications 1 à 4,
**caractérisé en ce que** la vis de pression (4) comprend un élément extérieur (23) et un élément intérieur (24) qui sont reliés solidement l'un à l'autre, de préférence à l'aide d'une liaison par vis formée d'un filetage intérieur (27') et d'un filetage extérieur (30').

6. Elément de serrage selon la revendication 5,
**caractérisé en ce qu'**il est prévu sur l'élément extérieur (23) une section formant manchon (27) sur laquelle sont disposées la bague de pression (25) et la bague d'étanchéité (26).

7. Elément de serrage selon l'une des revendications 1 à 6,
**caractérisé en ce que** la bague de pression (25) et la bague d'étanchéité (26) sont fixées axialement sur la vis de pression (4) entre deux collerettes radiales (28, 31).

8. Elément de serrage selon la revendication 5,
**caractérisé en ce qu'**il est prévu dans l'élément intérieur (24) un conduit de liaison (36) pour la communication fluidique entre la première chambre de pression (33) et la seconde chambre de pression (37).

9. Elément de serrage selon l'une des revendications 1 à 8,
**caractérisé en ce que** la seconde chambre de pression (37) est en communication fluidique avec l'espace de piston (17) par l'intermédiaire d'une ouverture de communication (17') disposée sur l'extrémité intérieure (18') du perçage (18).

10. Elément de serrage selon l'une des revendications 1 à 9,
**caractérisé en ce qu'**il est prévu dans le boîtier (2) deux perçages (18) dans lesquels sont montées des vis de pression (4), les vis de pression (4) étant diamétralement opposées par rapport à un côté frontal (3) du boîtier (2).

11. Elément de serrage selon l'une des revendications 1 à 10,
**caractérisé en ce qu'**il est prévu dans le boîtier (2) un perçage (39) avec un épaulement radial (39'), et un axe (40) est monté dans le perçage (3) avec une mobilité limitée, l'axe (40) étant apte à être déplacé à l'encontre de la force d'un ressort de pression (43) par une pression régnant dans une chambre (42).

12. Elément de serrage selon la revendication 11,
**caractérisé en ce que** l'axe (40) est guidé avec une extrémité extérieure dans un perçage (12') d'une bague de verrouillage (12) et est rendu étanche à l'aide d'une bague d'étanchéité (41).

13. Elément de serrage selon l'une des revendications 1 à 12,
**caractérisé en ce qu'**il est prévu sur le piston annulaire (6) une rondelle de pression qui s'étend radialement vers l'intérieur, au moins deux perçages (44) à axes parallèles étant prévus dans le boîtier (2), avec un épaulement radial (44'), et des perçages filetés (45) qui s'étendent coaxialement par rapport aux perçages (44) étant disposés dans ladite rondelle de pression, des vis (46) situées dans les perçages (44) étant vissées dans les perçages filetés (45).

14. Elément de serrage selon la revendication 13,
**caractérisé en ce qu'**il est prévu dans une partie élargie du perçage un ressort de pression (47) qui entoure la vis (46) et qui est en appui d'un côté contre l'épaulement radial (44'), et de l'autre côté contre une tête de vis (46') ou une rondelle intermédiaire (48).
